# EUROPÄISCHE PATENTSCHRIFT

(11) **EP 1 275 818 B1**
(45) Veröffentlichungstag und Bekanntmachung des Hinweises auf die Patenterteilung: **16.08.2006**
(21) Anmeldenummer: 02405528.7
(22) Anmeldetag: 25.06.2002
(51) Int. Cl.: F01D 5/18

(54) **Gasturbinenteil mit Kühlluftbohrungen**
Gas turbine component with cooling holes
Pièce de turbine à gaz comprenant des trous de refroidissement

(30) Priorität: 13.07.2001 CH 12912001
(43) Veröffentlichungstag der Anmeldung: 15.01.2003
(60) Teilanmeldung: 05101306.8
(73) Patentinhaber: Alstom Technology Ltd, 5400 Baden (CH)
(72) Erfinder: Fried, Reinhard, 5415 Nussbaumen (CH); Rathmann, Ulrich, 5400 Baden (CH)

(56) Entgegenhaltungen:
- EP-A- 0 365 195
- EP-A- 1 059 418
- DE-C- 4 447 515
- US-A- 3 584 972
- US-A- 3 623 711
- US-A- 3 672 787
- US-A- 5 113 648
- US-A- 5 941 686

## Beschreibung

### TECHNISCHES GEBIET

Bei der Erfindung handelt es sich um ein Teil einer Gasturbine, in welchem Kühlluftbohrungen vorhanden sind.

### STAND DER TECHNIK

Die Dokumente US-A-5,192,192 US-A-4,075,455, US-A-5,779,437, US-A-4,606,701 oder US-A-5,183,385 zeigen allgemein luftgekühlte Turbinenschaufeln, in welchen Kühlluft durch an verschiedenen Stellen angeordnete Kühlluftbohrungen strömt. Die Form der Kühlluftbohrung ist entsprechend ihrer Lage und ihrer Funktion ausgestaltet. In diesen Beispielen handelt es sich um Filmkühlungslöcher, welche einen Film auf einer Oberfläche eines Bauteils bilden und so das zugrunde liegende Bauteil kühlen.

Weiter sind aus den Schriften DE-OS-2 042 947, EP-A1-0 534 207, WO99/36675, US-A-6,120,249 oder US-A-4,040,767 verschiedene Schaufelanordnungen mit Kühlvorrichtungen bekannt geworden. In Gegensatz zu den o.g. Schriften handelt es sich dabei aber um eine Prallkühlung. Kühlluft strömt durch Kühlluftbohrungen eines Prallblechs auf eine sich in einem Abstand darunter befindende Plattform der Turbinenschaufel.

Ein Problem bei dem Kühlsystem von derartigen Turbinenschaufeln besteht darin, dass die Kühlluft Schmutz- oder Staubpartikel enthält. Während kleinere Partikel ungehindert durch die Kühlluftbohrungen, welche beispielsweise einen Durchmesser von 0.5 bis 1 mm haben können, ohne weitere Probleme strömen können, verschliessen grössere Partikel die Kühlluftbohrungen, so dass die Kühlleistung insgesamt herabgesetzt wird und eine Überhitzung des Bauteils droht.

Die Schrift EP-A1-1 072 757 schlägt daher einen staubresistentes, internes Kühlsystem einer Turbinenschaufel vor.

Die Schriften US-A-3,066,912, US-A-5,983,623, GB-A-2,342,142, DE-A1-44 22 965, DE-A1-35 32 168, DE-AS-25 14 704 oder US-A-4,173,458 lösen das oben genannte Problem durch Zyklone. Die verunreinigte Luft wird durch den Zyklon geleitet, die Asche abgeschieden, und die gereinigte Luft danach angeeigneter Stelle weiter verwendet.

Die vorgeschlagenen Massnahmen zur Trennung von Kühlluft und Staub sind jedoch recht aufwendig.

Weiterhin offfenbart US 3,623,711 eine Brennkammer mit einer Perforierung in deren Schutzmantelung, wobei die Öffnungen der Perforierung in einem bestimmten Winkel zur Oberfläche der Schutzmantelung verlaufen. Der Winkel ist so bestimmt, dass die Kühlluft eine Geschwindigkeitskomponente erhält, sodass eine Filmkühlung zustande kommt. Die angewinkelten Öffnungen werden vorzugsweise durch ein Stanz- und Prägeverfahren hergestellt.

### Darstellung der Erfindung

Die Erfindung löst die Aufgabe, ein Gasturbinenteil mit Kühlluftbohrungen zu schaffen, das durch Partikel, die sich in der Kühlluft befinden, nicht mehr ganz verschlossen werden. Insbesondere soll es sich bei dem Gasturbinenteil um eine Prallplatte oder ein Prallblech einer Plattform einer Turbinenschaufel handeln.

Erfindungsgemäss wird dies bei einem Gasturbinenteil mit Kühlluftbohrungen mit einer Massnahmen zur Verhinderung einer Verschliessung der Bohrungen gemäss den Ansprüchen 1-3 gelöst. Ein Verfahren zur Realisierung der Massnahme ist in Anspruch 4 gegeben.
Die Massnahme besteht in der besonderen Ausbildung der Austrittsöffnungen der Kühlluftbohrungen wie sternförmig oder kreisförmig mit seitlichen Schlitzen. Solche Austrittsöffnungen für Kühlluftbohrungen werden vorzugsweise durch einen Laser-, Wasser- oder Elektrodenstrahl hergestellt.
Die Partikel, welche die Kühlluft verunreinigen, bleiben zwar über den Kühlluftbohrungen liegen, verschliessen diese aber nicht mehr, sodass immer eine gewisse Kühlleistung durch Kühlluft, welche an den Partikeln vorbei durch die Kühlluftbohrung strömt, erhalten bleibt. Darüber hinaus besteht eine grössere Wahrscheinlichkeit, dass die Partikel durch Vibrationen oder Strömungsschwankungen in der Kühlluft aus dieser Lage wieder wegbewegt werden.

In einer beispielhaften Ausführungsform kann es sich bei dem Gasturbinenteil um ein Blechteil, zum Beispiel eine Prallplatte einer Plattform einer Laufschaufel, oder allgemein um ein zu kühlendes Gussteil.

### Kurze Beschreibung der Figuren

Die Erfindung ist anhand der beigefügten Figuren näher erläutert, wobei
- Fig. 1: ein Gasturbinenteil mit einer erfindungsgemässen Kühlluftbohrung in der Ausführungsform mit einer sternförmigen Austrittsöffnung zeigt,
- **Fig. 2**: den Schnitt gemäss der Linie II - II in der Figur 1 darstellt,
- Fig. 3: ein Gasturbinenteil mit erfindungsgemässen Kühlluftbohrungen in der Ausführungsform mit runden Austrittsöffnungen mit seitlichen Schlitzen.

Es sind nur die für die Erfindung wesentlichen Merkmale dargestellt. Gleiche Elemente haben in unterschiedlichen Figuren gleiche Bezugszeichen. Strömungsrichtungen sind mit Pfeilen gekennzeichnet.

### Weg zur Ausführung der Erfindung

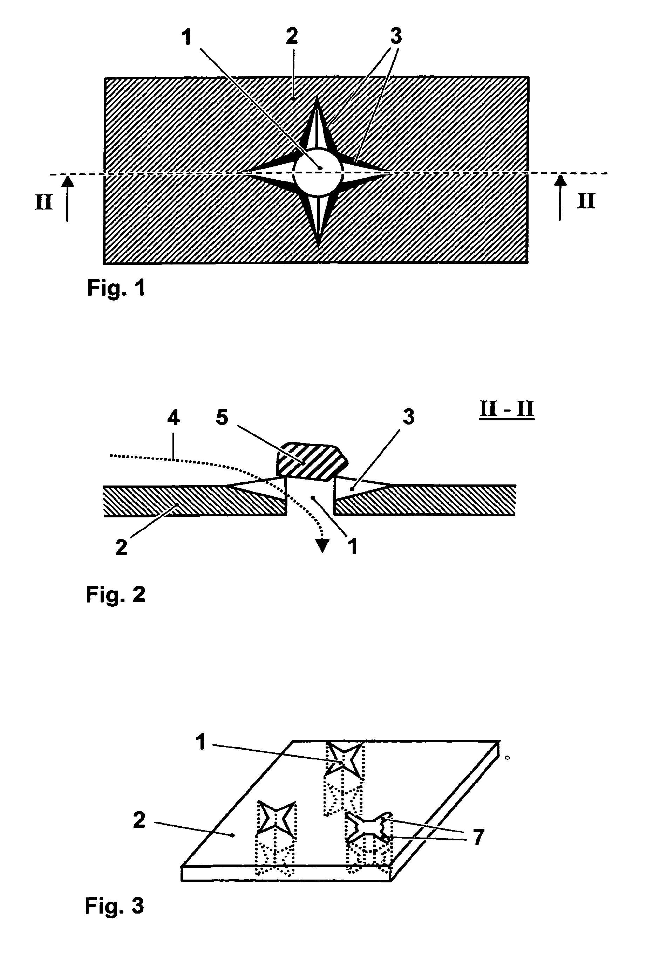

Die Figuren 1 und 2 zeigen eine erste Ausführungsform eines erfindungsgemässen Gasturbinenteils 2 mit einer Kühlluftbohrung 1, wobei die Figur 2 den Schnitt II - II in der Figur 1 zeigt. In diesem Ausführungsbeispiel ist dem Grundmaterial 2 ein Grat 3 in der Form eines Sterns aufgeprägt. Vorteilhaft bleiben Partikel 5, welche Kühlluft 4, die durch die Kühlluftbohrungen 1 während des Betriebs des zugrunde liegenden Bauteils strömt, verunreinigen, zwar über der Kühlluftbohrung 1 liegen, die Partikel 5 können diese Kühlluftbohrung 1 aber nicht mehr verschliessen. Wie aus der Figur 2 hervorgeht, bleibt immer eine gewisse Kühlleistung durch Kühlluft 4, welche an den Partikeln 5 vorbei durch die Kühlluftbohrung 1 strömt, erhalten. Darüber hinaus besteht vorteilhaft eine grössere Wahrscheinlichkeit, dass die Partikel 5 durch Vibrationen oder Strömungsschwankungen in der Kühlluft 4 aus dieser Lage wieder wegbewegt werden und die Kühlluftbohrung 1 freigeben.

Entsprechend der Figur 3 ist es denkbar, dass die Kühlluftbohrung 1 nicht kreisförmig ist. Sie kann prinzipiell sternförmig sein oder aus einer kreisförmigen Kühlluftbohrung 1 mit seitlichen Schlitzen 7 bestehen. Die kreisförmige Kühlluftbohrung 1 wird im letztgenannten Beispiel einen aus dem Stand der Technik bekannten Durchmesser aufweisen. Damit sind Partikel 5, die normalerweise die Kühlluftbohrung 1 verschliessen würden, so dass diese ihre Funktion verliert, nicht mehr in der Lage diese ganz zu verdecken. An den freien Enden der Kühlluftbohrung 1 strömt weiterhin die Kühlluft 4. Derartige Kühlluftbohrungen 1 können beispielsweise mit einem Laser, einem Wasserstrahl oder einem Elektrodenstrahl geschnitten werden.

In einem beispielhaften Ausführungsbeispiel kann es sich bei dem Gasturbinenteil um ein Blechteil, also zum Beispiel eine Prallplatte einer Plattform einer Laufschaufel, oder um ein zu kühlendes Gussteil.

## Patentansprüche

1. Gasturbinenteil (2) mit Kühlluftbohrungen (1), durch die mit Partikeln (5) beladene Kühlluft (4) während des Betriebs der Kühlluftbohrungen (1) strömt
**dadurch gekennzeichnet, dass**
die Austrittsöffnungen der Kühlluftbohrungen (1) sternförmig oder kreisförmig mit seitlichen Schlitzen ausgebildet sind.

2. Gasturbinenteil (2) nach Anspruch 1
**dadurch gekennzeichnet, dass**
den Kühlluftbohrungen (1) mit sternförmigen Austrittsöffnungen jeweils ein stemförmiger Grat aufgeprägt ist.

3. Gasturbinenteil (2) nach Anspruch 1
**dadurch gekennzeichnet, dass**
das Gasturbinenteil (2) ein Gussteil oder ein Blechteil ist.

4. Verfahren zur Herstellung eines Gasturbinenteils (2) nach Anspruch 1 oder 2
**dadurch gekennzeichnet, dass**
die Kühlluftbohrungen (1) mittels einem Laser-, Wasser- oder Elektrodenstrahl hergestellt werden.

## Claims

1. Gas turbine part (2) with cooling air holes (1), through which cooling air (4) which is loaded with particles (5) flows during the operation of the cooling air holes (1)
**characterized in that**
the outlet openings of the cooling air holes (1) are in the form of a star or circle with lateral slots.

2. Gas turbine part (2) according to Claim 1,
**characterized in that**
a ridge in the form of a star is stamped on each of the cooling air holes (1) with outlet openings in the form of a star.

3. Gas turbine part (2) according to Claim 1,
**characterized in that**
the gas turbine part (2) is a casting or a sheet-metal part.

4. Method for production of a gas turbine part (2) according to Claim 1 or 2,
**characterized in that**
the cooling air holes (1) are fabricated by means of a laser beam, a water jet or an electrode beam.

## Revendications

1. Pièce de turbine à gaz (2) avec trous (1) d'air de refroidissement, à travers lesquels s'écoule l'air de refroidissement (4) chargé de particules (5) pendant le fonctionnement des trous (1) d'air de refroidissement, **caractérisée en ce que** les ouvertures de sortie des trous (1) d'air de refroidissement sont produites en forme d'étoile ou en forme de cercle avec des fentes latérales.

2. Pièce de turbine à gaz (2) selon la revendication 1, **caractérisée en ce que** une crête en forme d'étoile est gravée au niveau des trous d'air de refroidissement (1) avec des ouvertures de sortie en forme d'étoile.

3. Pièce de turbine à gaz (2) selon la revendication 1, **caractérisée en ce que** la pièce de turbine à gaz (2) est une pièce coulée ou une pièce de tôle.

4. Procédé de fabrication d'une pièce de turbine à gaz (2) selon la revendication 1 ou 2, **caractérisé en ce que** les trous d'air de refroidissement (1) sont fabriqués au moyen d'un rayonnement laser, d'un jet d'eau ou d'un rayonnement d'électrode.
